(19) Europäisches Patentamt
European Patent Office
Office européen des brevets

(11) **EP 2 334 431 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(21) Anmeldenummer: **09776097.9**

(22) Anmeldetag: **13.08.2009**

(51) Int Cl.:
*B01J 47/14* *(2006.01)*   *B01J 49/00* *(2006.01)*
*C02F 1/00* *(2006.01)*   *C02F 1/42* *(2006.01)*
*G05D 21/02* *(2006.01)*

(86) Internationale Anmeldenummer:
**PCT/DE2009/001154**

(87) Internationale Veröffentlichungsnummer:
**WO 2010/025697 (11.03.2010 Gazette 2010/10)**

(54) **AUSSETZEN VON MESSGRÖSSENAUSWERTUNGEN IN EINER AUTOMATISCHEN WASSERENTHÄRTUNGSANLAGE BEI VORLIEGEN VON DEFINIERTEN BETRIEBSSITUATIONEN**

INTERRUPTION OF MEASURED VARIABLE ANALYSES IN AN AUTOMATIC WATER SOFTENING SYSTEM WHEN DEFINED OPERATING SITUATIONS ARE PRESENT

SUSPENSION DE L ÉVALUATION DE GRANDEURS DE MESURE DANS UNE INSTALLATION AUTOMATIQUE D ADOUCISSEMENT DE L EAU EN PRÉSENCE D ÉTATS DE FONCTIONNEMENT DÉFINIS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.09.2008 DE 102008045354**

(43) Veröffentlichungstag der Anmeldung:
**22.06.2011 Patentblatt 2011/25**

(73) Patentinhaber: **Judo Wasseraufbereitung GmbH**
**71364 Winnenden (DE)**

(72) Erfinder:
• **SÖCKNICK, Ralf**
**70806 Kornwestheim (DE)**
• **NEIDHARDT, Klaus**
**71577 Grosserlach (DE)**
• **HAUG, Alexander**
**71686 Remseck (DE)**
• **MELCHER, Siegfried**
**71720 Oberstenfeld (DE)**

(74) Vertreter: **Kohler Schmid Möbus Patentanwälte Partnerschaftsgesellschaft mbB**
**Ruppmannstraße 27**
**70565 Stuttgart (DE)**

(56) Entgegenhaltungen:
**WO-A2-2009/071066    US-A1- 2007 215 531**

**Beschreibung**

Die Erfindung betrifft ein Verfahren zum Betrieb einer Wasserenthärtungsanlage mit

- einer automatisch verstellbaren Verschneideeinrichtung zum Mischen eines Verschnittwasserstroms $V(t)_{verschnitt}$ aus einem ersten, enthärteten Teilstrom $V(t)_{teil1weich}$ und einem zweiten, rohwasserführenden Teilstrom $V(t)_{teil2roh}$,
- einer elektronischen Steuereinrichtung,
  wobei die Steuereinrichtung mittels einer oder mehrerer, experimentell bestimmter, momentaner Messgrößen die Verstellposition der Verschneideeinrichtung so nachregelt, dass die Wasserhärte im Verschnittwasserstrom $V(t)_{verschnitt}$ auf einen vorgegebenen Sollwert eingestellt wird, und mit
- einer oder mehreren Sensoreinrichtungen zur direkten oder indirekten Ermittlung der einen oder der mehreren momentanen Messgrößen.

Eine nach einem solchen Verfahren betriebene Wasserenthärtungsanlage ist bekannt geworden durch die EP 0 900 765 B1 oder auch durch die US 2007/0215531 A1.

Wasserenthärtung wird überall da eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser erwünscht ist.

Bei der Wasserenthärtung werden Enthärtungsvorrichtungen eingesetzt, die meist nach dem Ionenaustauschverfahren arbeiten. Die im Wasser enthaltenen Härtebildner (Calcium- und Magnesium-Ionen) werden dabei in einem Ionentauscherharz gegen Natrium-Ionen ausgetauscht. Bei Erschöpfung des Ionentauscherharzes muss dieses regeneriert werden, etwa durch Spülung mit einer Salzsole.

Wird eine einfache Enthärtungsvorrichtung seriell vor eine Wasserinstallation geschaltet, so hat die nachfolgende Wasserinstallation vollenthärtetes Wasser zur Verfügung. Aus technischen oder wirtschaftlichen Gründen ist es jedoch oft notwendig oder erwünscht, kein vollenthärtetes Wasser, sondern Wasser mit einer mittleren, jedoch eng definierten Wasserhärte zur Verfügung zu haben. Wasser mit einer zu niedrigen Wasserhärte kann zu Korrosionsproblemen in Leitungsinstallationen aufgrund fehlender oder schlechter Schutzschichtbildung führen, ist gesundheitlich (als Trinkwasser) aufgrund fehlender Mineralien weniger wertvoll und führt außerdem zu hohen Unterhaltskosten einer Wasserenthärtungsanlage wegen häufigen Regenerationen; andererseits kann eine zu hohe Wasserhärte aufgrund von Kalkablagerungen zur Beschädigung von Armaturen und technischen Geräten führen. Darüber hinaus gibt es auch technische Geräte, die ausschließlich oder jedenfalls bevorzugt mit einer eng definierten Wasserhärte betrieben werden; beispielsweise ist bei Waschmaschinen die optimale Waschmittelmenge stark von der Wasserhärte abhängig.

Aus der EP 0 900 765 B1 ist eine Wasserenthärtungsanlage mit vollautomatischer Verschneidung bekannt geworden. Ein Rohwasserstrom, welcher relativ hartes Wasser führt, wird auf einen ersten Teilstrom, der durch ein Ionentauscherharz strömt, und einen zweiten Teilstrom in einer Bypassleitung aufgeteilt. Nach der Enthärtung des ersten Teilstroms werden die Teilströme wieder vereint (so genannte Verschneidung). Mittels eines Leitfähigkeitssensors wird die Härte des zufließenden Rohwassers bestimmt, und ein Verhältnis der Teilströme, welches über zwei Durchflussmesser bestimmt wird, wird über ein automatisch verstellbares Ventil als Verschneideeinrichtung abhängig von der Rohwasserhärte nachgeregelt. Durch diese Wasserenthärtungsanlage kann ein Verschnittwasserstrom mit einer konstanten Wasserhärte auch bei schwankender Rohwasserhärte bereitgestellt werden.

Der Betrieb dieser bekannten Wasserenthärtungsanlage stellt jedoch hohe Anforderungen an die Verschleißfestigkeit der automatisch verstellbaren Verschneideeinrichtung. Bei Störungen an Bauteilen, die an der Verscheidungssteuerung mitwirken, können zudem stark vom Sollwert abweichende Wasserhärten im Verschnittwasser auftreten.

Aufgabe der Erfindung

Es ist die Aufgabe der vorliegenden Erfindung, ein Verfahren zum Betrieb einer Wasserenthärtungsanlage bereitzustellen, welches den Verschleiß an der automatisch verstellbaren Verschneideeinrichtung verringern und zugleich die Zuverlässigkeit der Einstellung der Wasserhärte des Verschnittwassers, soweit möglich, verbessern kann.

Kurze Beschreibung der Erfindung

Diese Aufgabe wird gelöst durch ein Betriebsverfahren der eingangs genannten Art, das dadurch gekennzeichnet ist, dass die Steuereinrichtung in einer oder mehreren definierten Betriebssituationen der Wasserenthärtungsanlage mindestens eine der einen oder mehreren momentanen Messgrößen für die Nachregelung der Verstellposition der Verschneideeinrichtung ignoriert und stattdessen von der jeweils letztgültigen entsprechenden Messgröße vor Eintritt der definierten Betriebssituation oder einem in der elektronischen Steuereinrichtung abgespeicherten Standardwert für die entsprechende Messgröße ausgeht.

Das erfindungsgemäße Betriebsverfahren erlaubt eine Differenzierung danach, ob die Auswertung einer momentanen Messgröße, welche die automatische Nachregelung der Verstellposition der Verschneideeinrichtung beeinflusst, gegenwärtig durchgeführt werden soll oder nicht. Soll die Auswertung nicht vorgenommen werden, so tritt an die Stelle der momentanen Messgröße entweder ein letztgültiger Wert der zughörigen Messgröße oder ein gespeicherter Standardwert (oder Ersatzwert). Im Rahmen der vorliegenden Erfindung wurde erkannt, dass die ersatzweise Heranziehung eines älteren Wertes einer Messgröße oder eines gespeicherten Standardwertes die Wasserverschneidung zuverlässiger machen oder auch den Verschleiß an der Verschneideeinrichtung (einschließlich ihrer automatischen Betätigungssysteme) verringern kann. Ein erfindungsgemäßer gespeicherter Standardwert für eine Messgröße kann fest in der Steuereinrichtung programmiert sein, oder auch im laufenden Betrieb der Wasserenthärtungsanlage gelegentlich aktualisiert werden (manuell oder auch automatisch).

Die Auswertung der momentanen (direkt oder indirekt sensorisch ermittelten) Messgröße unterbleibt erfindungsgemäß in bestimmten, definierten Betriebssituationen. Diese Betriebssituationen werden vor Inbetriebnahme der Wasserenthärtungsanlage festgelegt und typischerweise in der elektronischen Steuereinrichtung hinterlegt (programmiert). Eine hinterlegte Betriebssituation umfasst dabei sowohl das Kriterium (oder die Kriterien), wann diese Betriebssituation vorliegt, als auch die Festlegung der zu ignorierenden Messgröße und die ersatzweise heranzuziehende Messgröße. Definierte Betriebssituationen können im Rahmen der Erfindung nach Bedarf in Hinblick auf die Ausstattung und Funktionalitäten der betriebenen Wasserenthärtungsanlage festgelegt und eingerichtet werden.

Ein wichtiger Fall, für den eine definierte Betriebssituation erfindungsgemäß eingerichtet werden kann, besteht darin, dass eine momentanen Messgröße, wie sie der elektronischen Steuereinrichtung vorliegt, nicht vertrauenswürdig ist. Dies kann zum Beispiel die Folge eines Defekts an einer Messeinrichtung (Wasserhärte-Sensor, Durchflussmesser, etc.) sein. Ein nicht vertrauenswürdiger Wert kann beispielsweise daran erkannt werden, dass er außerhalb eines vordefinierten Wertebereichs liegt, oder dass die Werte zeitlich stark schwanken. Ein nicht vertrauenswürdiger Wert kann auch durch zusätzliche Sensoren, die mit der elektronischen Steuereinheit verbunden sind und nicht die Messgröße selbst überwachen, erkannt werden. Eine Verschneidungssteuerung basierend auf einer nicht vertrauenswürdigen Messgröße führt im Allgemeinen dazu, dass die Verschnittwasserhärte weit vom Sollwert abweichen kann. Durch Ersatz der nicht vertrauenswürdigen Messgröße im Rahmen der Erfindung kann die Abweichung der Verschnittwasserhärte vom Sollwert hingegen im Allgemeinen gering gehalten werden.

Ein weiterer wichtiger Fall, für den eine definierte Betriebssituation erfindungsgemäß eingerichtet werden kann, besteht darin, dass der Wert einer momentanen Messgröße sich seit einer letzten Nachregelung der Verstellposition nur geringfügig verändert hat, so dass die Verschnittwasserhärte ebenfalls nur geringfügig verändert sein kann. In dieser Situation kann durch die vorliegende Erfindung eine Nachregelung (mechanische Verstellung) der Verschneideeinrichtung verhindert werden. Typischerweise wird hierzu anstelle der kaum veränderten, momentanen Messgröße auf einen letztgültigen Wert für die entsprechende Messgröße (bei der letzten Nachregelung) zurückgegriffen; ohne eine veränderte Datenbasis braucht die elektronische Steuereinrichtung auch keine Verstellung der Verschneideeinrichtung anzusteuern. Dadurch wird die Häufigkeit von Verstellungen der Verschneideeinrichtung insgesamt reduziert und somit der mechanische Verschleiß verringert.

Erforderlichenfalls wird im Rahmen der vorliegenden Erfindung während der definierten Betriebssituationen eine (in der Regel unwesentliche und vorübergehende) Abweichung der Verschnittwasserhärte vom Sollwert hingenommen.

Der vorgegebene Sollwert der Verschnittwasserhärte kann ein einzelner Härtezielwert oder auch ein Härtezielwert-Intervall sein, bei dessen Verlassen eine Nachregelung der Verstellposition der Verschneideeinrichtung erfolgt.

Typische momentane Messgrößen, die die Steuereinrichtung zur Nachregelung der Verstellposition auswertet (und gegebenenfalls erfindungsgemäß ignoriert), sind beispielsweise die momentane Rohwasserhärte $WH_{roh}^{mom}$, die momentane Verschnittwasserhärte $WH_{verschnitt}^{mom}$, der momentane erste Teilstrom $V(t)_{teil1weich}^{mom}$, der momentane zweite Teilstrom $V(t)_{teil2roh}^{mom}$, der momentane gesamte Rohwasserstrom $V(t)_{rohges}^{mom}$ - auch kurz bezeichnet als $V(t)_{roh}^{mom}$, und der momentane Verschnittwasserstrom $V(t)_{verschnitt}^{mom}$. Momentane Messgrößen werden typischerweise mit (und in) der Wasserenthärtungsanlage experimentell bestimmt.

Eine Wasserhärtebestimmung mit einem Sensor erfolgt im Rahmen der Erfindung in der Regel indirekt durch die Umrechnung eines physikalischen Messwerts (etwa einer Leitfähigkeit) in eine Wasserhärte innerhalb der elektronischen Steuereinrichtung. Zur Bestimmung von Rohwasserhärten haben sich Leitfähigkeitssensoren bewährt. Zur Bestimmung der Verschnittwasserhärte oder der Weichwasserhärte eignen sich als Sensor beispielsweise eine ionensensitive Elektrode oder ein Titrator.

Die Steuerung der Verschneideeinrichtung erfolgt vereinfacht anhand einer bestimmten momentanen Wasserhärte des Rohwassers $WH_{roh}^{mom}$. Dabei wird auf die Anteile der beiden Teilströme am Verschnittwasser nur über die Einstellung der Verschneideeinrichtung geschlossen (die sich bei verschiedenen Einstellungen der Verschneideeinrichtung ergebenden Anteile der Teilströme müssen hierzu vorab bestimmt und in der elektronischen Steuereinrichtung hinterlegt werden). Bei konstanten Druckverhältnissen an Zu- und Ablauf de Wasserenthärtungsanlage ist die Verschneidung für die meisten Anwendungen ausreichend genau. Alternativ können die Teilströme auch laufend im Betrieb experimentell bestimmt werden, wodurch eine höhere Regelungsgenauigkeit erreichbar ist.

Bei Steuerung der Verschneideeinrichtung mittels einer experimentell bestimmten, momentanen Wasserhärte des Verschnittwassers $WH_{verschnitt}^{mom}$ können Schwankungen der Anteile der Teilströme im Verschnittwasser, die sich bei identischer Einstellung der Verschneideeinrichtung aufgrund von Schwankungen von Außenbedingungen (etwa der Druck des zulaufenden Rohwassers oder die Größe des Entnahmeflusses von Verschnittwasser) etwaig ergeben, ausgeglichen werden, und die Verschnittwasserhärte bleibt im Normalbetrieb besonders genau am Sollwert. Die Verstellposition der Verschneideeinrichtung wird in diesem Fall mittels der momentanen Verschnittwasserhärte $WH_{verschnitt}^{mom}$ unmittelbar auf den Sollwert nachgeregelt.

Zusammenfassend schlägt die vorliegende Erfindung vor, bei Mischung eines (nicht verschwindenden) Verschnittwasserstroms in den definierten Betriebssituationen die Nachregelung der Verstellposition der Verschneideeinrichtung auf Grundlage von in der Steuerung gespeicherten Werten für die mindestens eine Messgröße vorzunehmen. Dadurch wird die Auswertung bzw. Verwendung einer nicht vertrauenswürdigen, oder nur unerheblich veränderten momentanen Messgröße für die Nachregelung der Verstellposition vermieden. Die Aussetzung der Auswertung einer momentanen Messgröße kann erfindungsgemäß durch ein optisches und/oder akustisches Signal angezeigt werden.

Bevorzugte Varianten der Erfindung

Bevorzugt ist eine Variante des erfindungsgemäßen Verfahrens, die dadurch gekennzeichnet ist, dass die Wasserenthärtungsanlage einen Sensor im Rohwasserbereich der Wasserenthärtungsanlage zur Bestimmung der momentanen Rohwasserhärte $WH_{roh}^{mom}$ sowie mindestens zwei Durchflussmesser zur direkten oder indirekten Bestimmung der momentanen Teilströme $V(t)_{teil1weich}^{mom}$ und $V(t)_{teil2roh}^{mom}$ umfasst, und dass die Steuereinrichtung in den definierten Betriebssituationen mindestens eine der momentanen Messgrößen $WH_{roh}^{mom}$, $V(t)_{teil1weich}^{mom}$ und $V(t)_{teil2roh}^{mom}$ für die Nachregelung der Verstellposition der Verschneidevorrichtung ignoriert und stattdessen von der jeweils letztgültigen entsprechenden Messgröße vor Eintritt der definierten Betriebssituation oder einem in der elektronischen Steuereinrichtung abgespeicherten Standardwert für die entsprechende Messgröße ausgeht. Diese Ausführungsform kombiniert eine einfache Wasserhärtebestimmung im Rohwasserbereich mit der experimentellen (und damit genauer möglichen) Bestimmung der Teilströme im Betrieb. Bei indirekter Bestimmung (über Differenzbildung) eines oder mehrerer der Teilströme $V(t)_{teil1weich}^{mom}$ und $V(t)_{teil2roh}^{mom}$ muss gegebenenfalls ein dritter Teilstrom $V(t)_{teil3spül}^{mom}$, welcher zum Regenerieren der Enthärtungsvorrichtung eingesetzt wird, mitberücksichtigt werden. In den definierten Betriebssituationen ist eine oder mehrere der momentanen Messgrößen nicht vertrauenswürdig oder deren Wert hat sich seit einer letzten Nachregelung der Verstellposition der Verschneideeinrichtung nur geringfügig verändert.

Bei einer ganz besonders bevorzugten Weiterentwicklung dieser Variante ist vorgesehen, dass der Sensor als ein Leitfähigkeitssensor ausgebildet ist, welcher die momentane elektrische Leitfähigkeit $L_{roh}^{mom}$ des Rohwassers bestimmt, dass die Steuereinrichtung aus der bestimmten, momentanen Leitfähigkeit $L_{roh}^{mom}$ des Rohwassers die momentane Rohwasserhärte $WH_{roh}^{mom}$ bestimmt, wobei die Steuereinrichtung weiterhin aus der bestimmten momentanen Rohwasserhärte $WH_{roh}^{mom}$ ein momentanes Soll-Verhältnis der Teilströme $V(t)_{teil1weich}$ und $V(t)_{teil2roh}$ bestimmt, mittels dessen sich im Verschnittwasserstrom $V(t)$ verschnitt der vorgegebene Sollwert der Wasserhärte einstellt, und wobei die Steuereinrichtung die Verstellposition der Verschneideeinrichtung mittels der bestimmten, momentanen Teilströme $V(t)_{teil1weich}^{mom}$ und $V(t)_{teil12roh}^{mom}$ auf das momentane Soll-Verhältnis nachregelt. Diese Variante hat sich in der Praxis bewährt. Die Wasserhärte wird in der Regel mittels einer Kennlinie aus der Leitfähigkeit berechnet, oder anhand einer Zuordnungstabelle ausgelesen. Ebenso wird das Sollverhältnis der Teilströme in der Regel berechnet.

Bevorzugt ist weiterhin eine Weiterentwicklung der obigen Verfahrensvariante, bei der die Steuereinrichtung die Messgrößen für die beiden momentanen Teilströme $V(t)_{teil1weich}^{mom}$ und $V(t)_{teil2roh}^{mom}$ nur gemeinsam ignoriert. Dies sorgt dafür, dass vom letztgültigen (letzten vertrauenswürdigen) Verhältnis der Teilströme oder einem Standard-Verhältnis ausgegangen wird und vermeidet so größere Abweichungen der Verschnittwasserhärte vom Sollwert.

Eine andere, bevorzugte Weiterentwicklung sieht vor, dass die definierten Betriebssituationen Zeiten umfassen, in denen sich das Verhältnis der Messgrößen $V(t)_{teil1weich}^{mom}$ zu $V(t)_{teil2roh}^{mom}$ seit der letzten Nachregelung der Verstellposition der Verschneideeinrichtung um weniger als einen relativen Strömeänderungswert verändert hat, insbesondere wobei der relative Strömeänderungswert zwischen 2% und 10% beträgt. Hierdurch kann eine Verschleißverringerung der Verschneideeinrichtung durch weniger häufiges Nachregeln erreicht werden. Typische Verhältnisse von erstem und zweiten Teilstrom liegen im Bereich von 0,25 bis 3. Beträgt beispielsweise die Rohwasserhärte 12°dH (dH=Deutsche Härte), und es soll eine Verschnittwasserhärte von 8°dH erreicht werden, so liegt das Soll-Verhältnis von Weichwasser (erster Teilstrom, mit Härte 0°dH) und Rohwasser (zweiter Teilstrom, mit Härte 12°dH) bei 1:2 = 0,5. Bei der letzten Nachregelung wurde das tatsächliche, momentane Verhältnis von ersten und zweitem Teilstrom auf das Sollverhältnis 0,5 eingeregelt. Wenn sich nun das tatsächliche Verhältnis ändert (etwa in folge geänderter Strömungsverhältnisse bei geändertem Gesamt-Durchfluss), so erfolgt eine Nachregelung bei einem relativen Strömeänderungswert von beispielsweise 5% erst dann, wenn das tatsächliche Verhältnis auf 0,475 abgesunken oder auf 0,525 angestiegen ist (5% von 0,5 = 0,025).

Eine andere, vorteilhafte Verfahrensvariante sieht vor, dass die Wasserenthärtungsanlage einen Sensor im Verschnittwasserbereich der Wasserenthärtungsanlage zur Bestimmung der momentanen Verschnittwasserhärte $WH_{verschnitt}^{mom}$ umfasst, und dass die Steuereinrichtung in den definierten Betriebssituationen zumindest die momentane Messgröße $WH_{verschnitt}^{mom}$, für die Nachregelung der Verstellposition der Verschneidevorrichtung ignoriert und stattdessen von der letztgültigen bestimmten Verschnittwasserhärte vor Eintritt der definierten Betriebssituation oder einem in der elektronischen Steuereinrichtung abgespeicherten Standardwert für die Verschnittwasserhärte ausgeht. In dieser Variante kann eine sehr exakte Verschnittwassereinstellung erfolgen, ohne dass der erste oder der zweite Teilstrom bestimmt zu werden brauchen. Die Verschnittwasserhärte kann unmittelbar mit dem Sollwert verglichen und die Verstellposition geeignet nachregelt werden.

Bei einer vorteilhaften Verfahrensvariante umfassen die definierten Betriebssituationen die Zeiten einer Regeneration einer Enthärtungsvorrichtung. Wenn der erste oder zweite Teilstrom indirekt (über Differenzbildung, etwa mit dem Gesamt-Rohwasserstrom) bestimmt wird, und ein Spülstrom $V(t)_{teil3spül}$ durch die Enthärtungsvorrichtung, der typischerweise vom oder vor dem ersten Teilstrom abgezweigt wird, nicht erfasst wird, wird die indirekte Bestimmung der Teilströme inkorrekt und damit nicht vertrauenswürdig.

Ganz besonders bevorzugt ist eine Verfahrensvariante, bei der die definierten Betriebssituationen das Unterschreiten einer Mindestdurchflussmenge und/oder das Überschreiten einer Höchstdurchflussmenge an einem Durchflussmesser umfasst. In diesem Fall erfolgt typischerweise ein Ignorieren derjenigen Messgrößen, die von diesem Durchflussmesser abhängen (in der Regel $V(t)_{teil1weich}^{mom}$ und $V(t)_{teil2roh}^{mom}$). Die Auswertung der Durchflussmenge erfolgt bevorzugt nur in einem mittleren Arbeitsbereich des Durchflussmessers, insbesondere zwischen 100l/h und 2500 l/h, bevorzugt 150 l/h bis 1800 l/h, in welchem der Durchflussmesser zuverlässig und genau arbeitet; außerhalb liegende Werte werden als nicht vertrauenswürdig angesehen. Die Mindestdurchflussmenge entspricht typischerweise dem Anlaufwert des Durchflussmessers (oder auch geringfügig darüber); die Höchstdurchflussmenge entspricht typischerweise dem oberen Arbeitsbereich des Durchflussmessers (oder auch geringfügig darunter), oder auch (beim ersten Teilstrom) dem Nennvolumenstrom der Enthärtungsvorrichtung, oberhalb dessen die Enthärtung nur noch unvollständig erfolgt.

Bevorzugt ist auch eine Verfahrensvariante, bei der die definierten Betriebssituationen Zeiten umfassen, in denen ein Härtedurchbruch an der Wasserenthärtungsanlage vorliegt. Ein Härtedurchbruch liegt vor, wenn Enthärtungsvorrichtung erschöpft ist (etwa bei Salzmangel für die Regeneration), oder der Nennvolumenstrom der Enthärtervorrichtung überschritten wird. In diesem Fall kann der Sollwert des Verschnittwasserstroms nicht erreicht werden, und Verstellungen der Verschneideeinrichtung können zur Verringerung von Verschleiß unterbleiben. Zusätzlich kann ein vorliegender Härtedurchbruch durch ein optisches und/oder akustisches Signal angezeigt werden.

Bevorzugt ist weiterhin eine Verfahrensvariante, bei der die definierten Betriebssituationen Zeiten umfassen, in denen eine Leckage an der Wasserenthärtungsanlage oder einer etwaigen, dieser nachgeordneten Wasserinstallation festgestellt ist. Die Festestellung einer Leckage kann beispielsweise über Feuchtigkeitssensoren und/oder über untypische Strömungszustände, erschlossen aus den Messgrößen von Durchflussmessern, die bei der Bestimmung der momentanen Teilströme eingesetzt werden, erfolgen; untypische Strömungszustände umfassen beispielsweise sehr große absolute Durchflüsse (großes Leck, "Rohrbruch") oder lang andauernde, konstante, kleine Durchflüsse (kleines Leck bei sonst geschlossenen Armaturen, "tropfender Wasserhahn").

Besonders bevorzugt ist eine Verfahrensvariante, bei der in zumindest einem Teil der definierten Betriebssituationen die Steuereinrichtung die Nachregelung der Verstellposition der Verschneideeinrichtung ganz aussetzt, so dass der Verschnittwasserstrom mit der letzten, vor Eintritt der definierten Betriebssituation eingestellten Verstellposition der Verschneideeinrichtung gemischt wird. In diesem Fall werden effektiv alle momentanen Messgrößen ignoriert. Dies vermeidet zuverlässig exotische Verstellpositionen der Verschneideeinrichtung und trägt somit dazu bei, die Verschnittwasserhärte auch bei Störungen nahe beim Sollwert zu halten. Alternativ zur Aussetzung der Nachregelung können auch alle Messgrößen jeweils auf einen Standardwert gesetzt werden und eine entsprechende Verstellposition der Verschneideeinrichtung aufgesucht werden.

Ganz besonders bevorzugt ist eine Verfahrensvariante, bei der die definierten Betriebssituationen Zeiten umfassen, in denen eine experimentell bestimmte, momentane Wasserhärte, insbesondere eine momentane Rohwasserhärte $WH_{roh}^{mom}$ oder eine momentane Verschnittwasserhärte $WH_{verschnitt}^{mom}$, außerhalb eines vorgegebenen Werteintervalls liegt, insbesondere wobei das Werteintervall 2°dH bis 50°dH umfasst. Dadurch können Fehlfunktionen des Sensors, die abwegige (nicht vertrauenswürdige) Härtewerte liefern, erkannt und für die Nachregelung der Verschneideeinrichtung ignoriert werden. Bei einer Weichwasser-Härtebestimmung umfasst das Werteintervall einen Bereich beginnend bei 0° dH, also zum Beispiel 0°dH bis 50°dH. Die Fehlfunktion eines Sensors bzw. die Aussetzung der Auswertung der zugehörigen momentanen Messgröße für die Nachregelung der Verstellposition der Verschneideeinrichtung kann durch ein optisches und/oder akustisches Signal angezeigt werden.

Ebenfalls ganz besonders bevorzugt ist eine Verfahrensvariante, bei der die definierten Betriebssituationen Zeiten umfassen, in denen eine experimentell bestimmte, momentane Wasserhärte, insbesondere eine momentane

Rohwasserhärte $WH_{roh}^{mom}$ oder eine momentane Verschnittwasserhärte $WH_{verschnitt}^{mom}$, sich seit der letzten Nachregelung der Verstellposition der Verschneideeinrichtung um weniger als einen vordefinierten Härtedifferenzwert verändert hat, insbesondere wobei der Härtedifferenzwert zwischen 0,2°dH und 2,0°dH beträgt. Dies vermeidet Verschleiß an der Verschneideeinrichtung durch häufiges Nachregeln. Es ist auch ein relativer Härtedifferenzwert möglich.

Bei einer bevorzugten Verfahrensvariante ist vorgesehen, dass die Wasserenthärtungsanlage einen Leitfähigkeitssensor im Rohwasserbereich zur Bestimmung der momentanen Leitfähigkeit des Rohwassers $L_{roh}^{mom}$ umfasst, und dass die definierten Betriebssituationen Zeiten umfassen, in denen sich die momentane Messgröße $L_{roh}^{mom}$ seit der letzten Nachregelung der Verstellposition der Verschneideeinrichtung um weniger als einen vordefinierten Leitfähigkeitsdifferenzwert verändert hat, insbesondere wobei der Leitfähigkeitsdifferenzwert zwischen 5 μS/cm und 50 μS/cm beträgt. Hierdurch wird ebenfalls der Verschleiß an der Verschneideeinrichtung reduziert. Es ist auch ein relativer Leitfähigkeitsdifferenzwert möglich.

Vorteilhaft ist weiterhin eine Verfahrensvariante, bei der die definierten Betriebssituationen Zeiten umfassen, in denen unmittelbar vor einer beabsichtigten Auswertung einer oder mehrerer der momentanen Messgrößen nicht wenigstens eine Mindestmenge an Wasser durch die Wasserenthärtungsanlage unterbrechungsfrei geflossen ist. Dies erhöht die Messgenauigkeit (und damit Vertrauenswürdigkeit der Messgrößen) am Sensor und an den Durchflussmessern, insbesondere durch Vermeidung der Vermessung von abgestandenem Wasser, und die Vermeidung der Auslesung von noch anlaufenden, beweglichen Teilen. Eine typische Mindestmenge an Wasser liegt im Bereich von 250 ml bis 5 Liter, insbesondere bei ca. 1 Liter.

Ebenso vorteilhaft ist eine Verfahrensvariante, bei der die definierten Betriebssituationen Zeiten umfassen, in denen unmittelbar vor einer beabsichtigten Auswertung einer oder mehrerer der momentanen Messgrößen nicht wenigstens für eine Mindestzeitdauer Wasser durch die Wasserenthärtungsanlage unterbrechungsfrei geflossen ist. Dies erhöht in ähnlicher Weise die Messgenauigkeit (und damit Vertrauenswürdigkeit der Messgrößen) am Sensor und an den Durchflussmessern. Ein typischer Wert für die Mindestzeitdauer liegt im Bereich von 5 Sekunden bis 1 Minute, insbesondere bei ca. 10 Sekunden. Die Steuereinrichtung greift bevorzugt nur auf die momentanen Messgrößen zu, wenn zuvor ein bestimmtes Wasservolumen (Mindestmenge) *und* für eine bestimmte Zeit (Mindestzeitdauer) Wasser am Stück durch die Enthärtungsanlage geflossen ist.

Bevorzugt ist auch eine Verfahrensvariante, die vorsieht, dass die Wasserenthärtungsanlage ein automatisch betätigbares Absperrventil unmittelbar hinter einem Zulauf der Wasserenthärtungsanlage umfasst, und dass die Steuereinrichtung nach Feststellung einer Leckage das Absperrventil automatisch schließt, so dass der Wasserfluss durch die Wasserenthärtungsanlage und eine etwaige an einem Auslass (3) der Wasserenthärtungsanlage angeschlossene Wasserinstallation unterbrochen ist. Dadurch kann ein guter Wasserschadenschutz erreicht werden. Die Feststellung einer Leckage erfolgt beispielsweise über einen Feuchtigkeitssensor oder über die Feststellung untypischer Strömungszustände über die Durchflussmesser (vgl. oben).

*Verfahrensvarianten betreffend eine Regenerationssteuerung*

Bevorzugt ist auch eine Variante des erfindungsgemäßen Betriebsverfahrens, die dadurch gekennzeichnet ist, dass die Wasserenthärtungsanlage weiterhin ein Vorratsgefäß zur Bereitstellung von Regeneriermittellösung sowie Mittel zur automatischen Durchführung einer Regeneration einer Enthärtungsvorrichtung umfasst, und dass die Steuereinrichtung in Abhängigkeit von den seit der letzten Regeneration der Enthärtungsvorrichtung erfolgten Weichwasserentnahmen automatisch eine Regeneration der Enthärtungsvorrichtung auslöst. In dieser Variante wird in die Steuerungsfunktionen der elektronischen Steuervorrichtung die Ansteuerung der Regeneration der Enthärtungsvorrichtung integriert. Typischerweise wird von einer immer gleichen Grundkapazität der Enthärtervorrichtung nach einer Regeneration ausgegangen, die bei einer zugrunde gelegten Rohwasserhärte einer bestimmten erzeugten Weichwassermenge entspricht. Im einfachsten Fall ist die zugrunde gelegte Rohwasserhärte vorprogrammiert (fest programmiert oder nur manuell abänderbar).

Bei einer ganz besonders bevorzugten Weiterentwicklung dieser Variante ist vorgesehen, dass die Steuereinrichtung in Abhängigkeit von den seit einer letzten ausgelösten Regeneration erfolgten Weichwasserentnahmen und einer oder mehreren, zughörigen, bestimmten Rohwasserhärten eine Restkapazität der Enthärtungsvorrichtung ermittelt und bei deren Erschöpfung automatisch eine Regeneration der Enthärtungsvorrichtung auslöst. Durch diese Weiterbildung kann die Ansteuerung der Regeneration der Enthärtungsvorrichtung effizienter gestaltet werden.

Typischerweise wird von einer immer gleichen Grundkapazität der Enthärtervorrichtung nach einer Regeneration ausgegangen, die bei einer zugrunde gelegten Rohwasserhärte einer bestimmten erzeugten Weichwassermenge entspricht. Im Rahmen der vorliegenden Erfindung wird die für die Regenerationssteuerung zugrunde zu legende Rohwasserhärte bevorzugt über einen Sensor direkt oder indirekt empirisch ermittelt. Im einfachsten Fall wird nach Abschluss einer Regeneration die Rohwasserhärte (etwa zu Beginn der ersten Wasserentnahme) einmalig neu bestimmt und die erzeugbare Weichwassermenge für den laufenden Betriebszyklus (=die Zeit zwischen zwei Regenerationen) entsprechend aktualisiert. Die Aktualisierung der Weichwassermenge kann aber zur Vereinfachung unterbleiben, wenn die Änderung in der neu bestimmten Rohwasserhärte gegenüber der letzten zugrunde gelegten Rohwasserhärte unterhalb eines Änderungs-Grenzwerts bleibt. Typische Änderungs-Grenzwerte, unterhalb denen die Aktualisierung der Wassermenge unterbleibt, liegen im Bereich 0,5°dH bis 2,0°dH.

Zur Erhöhung der Genauigkeit der Bestimmung der Restkapazität können auch die verschiedenen Weichwasserentnahmen innerhalb eines Betriebszyklus mit den zughörigen, momentanen Rohwasserhärten gewichtet werden. Dabei kann meist ohne merklichen Genauigkeitsverlust eine einzige, zu Beginn einer jeden Weichwasserentnahme bestimmte Rohwasserhärte für eine gesamte restliche Wasserentnahme vereinfachend unterstellt werden. Die bei einer jeden Wasserentnahme jeweils verbrauchte Kapazität verringert die verbleibende Kapazität (Restkapazität) der Enthärtungsvorrichtung im laufenden Betriebszyklus. Alternativ kann aber auch mit aufwändigeren mathematischen Verfahren (etwa Faltungsverfahren) eine kontinuierliche Erfassung des Kapazitätsverbrauchs erfolgen, die auch Änderungen der Rohwasserhärte während einer einzelnen Wasserentnahme berücksichtigt.

Die Rohwasserhärte wird im einfachsten Fall mittels eines Sensors direkt im Rohwasserbereich bestimmt; es kann aber auch die Rohwasserhärte aus der momentanen Verschnittwasserhärte in Verbindung mit den momentanen Teilströmen (insbesondere deren momentanem Verhältnis) bestimmt werden.

Die entnommene Weichwassermenge wird entweder direkt mittels eines Durchflussmessers (meist im Weichwasserbereich) oder indirekt über Differenzbildung bestimmt.

Alternativ zur Bestimmung der Rohwasserhärte und der seit einer letzten ausgelösten Regeneration erfolgten Weichwasserentnahmen für die Ansteuerung der Regeneration der Enthärtungsvorrichtung kann die Qualität des Weichwassers mittels eines Sensors zur Härtebestimmung im Weichwasserbereich kontrolliert werden. Sobald die Weichwasserhärte einen Grenzwert übersteigt, wird eine Regeneration ausgelöst. Typische Grenzwerte, oberhalb derer eine Regeneration ausgelöst wird, liegen im Bereich 0,5°dH bis 2,0°dH. Der Sensor kann beispielsweise als ionensensitive Elektrode oder Titrator ausgebildet sein.

Bei einer Fortentwicklung der oben angegebenen Weiterentwicklung ist vorgesehen, dass die Steuereinrichtung in einer oder mehreren definierten Betriebssituationen mindestens eine der einen oder mehreren momentanen Messgrößen auch für die automatische Auslösung einer Regeneration der Enthärtungsanlage ignoriert und stattdessen von der jeweils letztgültigen entsprechenden Messgröße vor Eintritt der Betriebssituation oder einem in der elektronischen Steuereinrichtung abgespeicherten Standardwert für die entsprechende Messgröße ausgeht. Dadurch kann die Zuverlässigkeit der automatischen Regenerationssteuerung verbessert werden und insbesondere die Wahrscheinlichkeit für einen Härtedurchbruch infolge der Erschöpfung der Enthärtungsvorrichtung verringert werden. Meist wird dabei ein als unzuverlässig erkannter Wert für $WH_{roh}^{mom}$ bzw. $WH_{verschnitt}^{mom}$ für die Regenerationssteuerung ignoriert. Man beachte, dass die erfindungsgemäßen Ersatzwerte zu momentanen Messgrößen für die Verschnittsteuerung und die Regenerationssteuerung unterschiedlich sein können.

Eine andere Fortentwicklung der oben angegebenen Weiterentwicklung ist dadurch gekennzeichnet, dass die Wasserenthärtungsanlage einen Leitfähigkeitssensor im Rohwasserbereich aufweist, und dass eine Gesamthärte I des Rohwassers, die zur Steuerung des Regeneriervorgangs der Enthärtungsvorrichtung verwendet wird, mittels einer ersten Kalibrierkennlinie (F1) aus der gemessenen Leitfähigkeit $L_{roh}$ abgeleitet wird, und eine Gesamthärte II des Rohwassers, die zur Steuerung der Verschneideeinrichtung verwendet wird, mittels einer zweiten Kalibrierkennlinie (F2) aus der gemessenen Leitfähigkeit $L_{roh}$ abgeleitet wird. Durch die Verwendung der beiden unterschiedlichen Kalibrierkennlinien kann die Genauigkeit der automatischen Verschneidung sowie die Sicherheit (Rechtzeitigkeit) der automatischen Regenerationsauslösung verbessert werden.

In obiger Fortentwicklung ist bevorzugt vorgesehen, dass die aus der ersten Kalibrierkennlinie (F1) abgeleitete Gesamthärte I zumindest abschnittsweise größer ist als die aus der zweiten Kalibrierkennlinie (F2) abgeleitete Gesamthärte II. Typischerweise hat die erste Kalibrierkennlinie (F1) einen Umrechnungsfaktor von 28-35 $\mu$S/cm pro °dH, insbesondere 30-33 $\mu$S/cm pro °dH, und die zweite Kalibrierkennlinie (F2) hat typischerweise einen Umrechnungsfaktor von 35-44 $\mu$S/cm pro °dH, insbesondere 38-41 $\mu$S/cm pro °dH.

*Weitere Aspekte der Erfindung*

In den Rahmen der vorliegenden Erfindung fällt auch eine Wasserenthärtungsanlage mit

- einer automatisch verstellbaren Verschneideeinrichtung zum Mischen eines Verschnittwasserstroms $V_{verschnitt}(t)$ aus einem ersten, enthärteten Teilstrom $V(t)_{teil1weich}$ und einem zweiten, rohwasserführenden Teilstrom $V(t)_{teil2roh}$,
- einer einen Speicher umfassenden elektronischen Steuereinrichtung,
  wobei die Steuereinrichtung dazu ausgebildet ist, mittels einer oder mehrerer, experimentell bestimmter, momentaner Messgrößen die Verstellposition der Verschneideeinrichtung so nachzuregeln, dass die Wasserhärte im Verschnittwasserstrom auf einen vorgegebenen Sollwert eingestellt wird, und mit
- einer oder mehreren Sensoreinrichtungen zur direkten oder indirekten Ermittlung der einen oder der mehreren momentanen Messgrößen,

dadurch gekennzeichnet, dass in dem Speicher eine oder mehrere definierte Betriebssituation(en) der Wasseraufbereitungsanlage abgespeichert sind, bei deren Vorliegen mindestens eine der einen oder mehreren momentanen Messgrößen für die Nachregelung der Verstellposition der Verschneideeinrichtung von der Steuereinrichtung ignorierbar ist, und dass in der Steuereinrichtung ein Standardwert für die mindestens eine momentane Messgröße oder eine jeweils letztgültige entsprechende Messgröße vor Eintritt der definierten Betriebssituation für die Nachregelung der Verstellposition der Verschneideeinrichtung abgespeichert ist. Bei der erfindungsgemäßen Wasserenthärtungsanlage kann der Verschleiß an der Verschneideeinrichtung reduziert werden, und ein höheres Maß an Sicherheit bei der Einregelung der Verschnittwasserhärte erreicht werden. Die Steuereinrichtung weist typischerweise auch Zwischenspeicher für letztgültige Messgrößen und/oder Speicher für Standardwerte von Messgrößen auf.

Ebenfalls in den Rahmen der vorliegenden Erfindung fällt die Verwendung einer erfindungsgemäßen Wasserenthärtungsanlage in einem erfindungsgemäßen, oben beschriebenen Verfahren.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Die Erfindung ist in der Zeichnung dargestellt und wird anhand von Ausführungsbeispielen näher erläutert. Es zeigt:

Fig. 1    eine schematische Darstellung einer erfindungsgemäßen Wasserenthärtungsanlage, mit einem Leitfähigkeitssensor im Rohwasserbereich, zur Verwendung in einem erfindungsgemäßen Verfahren;

Fig. 2    eine schematische Darstellung einer erfindungsgemäßen Wasserenthärtungsanlage, mit einem Härtesensor im Verschnittwasserbereich, zur Verwendung in einem erfindungsgemäßen Verfahren.

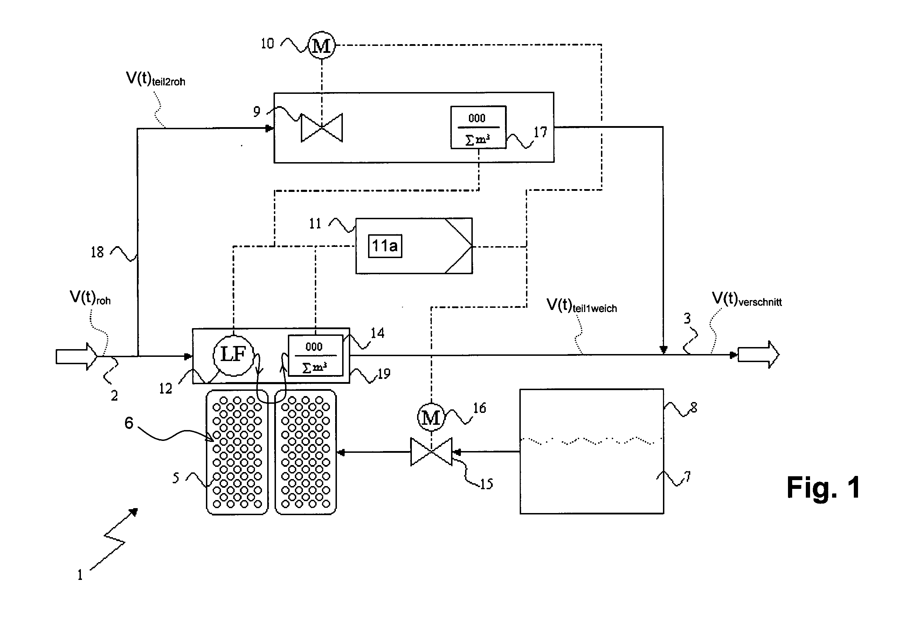

Die **Fig. 1** zeigt in schematischer Darstellung eine erfindungsgemäße Wasserenthärtungsanlage 1 zur Verwendung mit einem erfindungsgemäßen Betriebsverfahren.

Die Wasserenthärtungsanlage 1 ist über einen Zulauf 2 an ein lokales Wasserversorgungssystem, etwa das Trinkwassernetz, angeschlossen. Ein erster Teil des am Zulauf fließenden (gesamten) Rohwasserstroms $V(t)_{roh}$ fließt einer Enthärtungsvorrichtung 6 zu, welche insbesondere einen Steuerkopf 19 sowie zwei Kammern mit Ionentauscherharz 5 aufweist. Ein zweiter Teil des Rohwassers fließt in eine Bypassleitung 18 ein.

Das in die Enthärtungsvorrichtung 6 einfließende Rohwasser passiert zunächst einen Leitfähigkeitssensor 12, mit dem die momentane Wasserhärte $WH_{roh}{}^{mom}$ des Rohwassers bestimmt wird. Sodann passiert dieses Rohwasser eine der beiden Kammern mit Ionentauscherharz 5, wobei dieses vollständig enthärtet wird. Schließlich passiert das enthärtete Wasser den Durchflussmesser 14, der den momentanen, ersten Teilstrom $V(t)_{teil1weich}{}^{mom}$ bestimmt.

Der zweite Teil des Rohwassers in der Bypassleitung 18 passiert zunächst eine automatisch betätigbare Verschneideeinrichtung, hier ein mit einem Stellmotor 10 verstellbares Verschneideventil 9, und anschließend einen Durchflussmesser 17, welcher den momentanen zweiten Teilstrom $V(t)_{teil2roh}{}^{mom}$ bestimmt.

Der erste Teilstrom $V(t)_{teil1weich}$ und der zweite Teilstrom $V(t)_{teil2roh}$ werden schließlich zu einem Verschnittwasserstrom $V(t)_{verschnitt}$ vereint, welcher einem Ablauf 3 zufließt. Der Ablauf 3 ist an eine nachfolgende Wasserinstallation, etwa die Frischwasserleitungen eines Gebäudes, angeschlossen.

Die Messergebnisse des Leitfähigkeitssensors 12 und der Durchflussmesser 14, 17 werden an eine elektronische Steuereinrichtung 11 gemeldet. In der Steuereinrichtung 11 ist ein gewünschter Sollwert SW der Wasserhärte (hier 8°dH) des Verschnittwassers hinterlegt. Aus dem Sollwert SW der Verschnittwasserhärte und der momentanen Wasserhärte $WH_{roh}{}^{mom}$ ermittelt die Steuereinrichtung 11 ein momentanes Soll-Verhältnis der Teilströme $V(t)_{teil1weich}$ und $V(t)_{teil2roh}$, durch welches sich die gewünschte Wasserhärte im Verschnittwasser ergibt. Entsprechen die momentanen Teilströme $V(t)_{teil1weich}{}^{mom}$ und $V(t)_{teil2roh}{}^{mom}$ nicht dem Soll-Verhältnis, so regelt die Steuereinrichtung 11 automatisch die Verstellposition (hier den Strömungsquerschnitt) des Verschneideventils 9 über den Stellmotor 10 nach, beispielsweise über eine PD- oder PID-Regelung. Dadurch kann die Wasserenthärtungsanlage 1 auch bei schwankender Rohwasserhärte eine konstante Verschnittwasserhärte liefern.

Zusätzlich überwacht die Steuereinrichtung 11 auch den Erschöpfungsgrad der gerade aktiven Kammer der Enthärtungsvorrichtung 6. Bei Wasserentnahmen wird dabei die entnommene Weichwassermenge jeweils mit der zugehörigen momentanen Rohwasserhärte gewichtet und von der (derzeitigen Rest-) Kapazität abgezogen. Ist die Kammer erschöpft, so schaltet die Steuereinrichtung 11 die Enthärtungsvorrichtung 6 auf die andere (nichterschöpfte) Kammer um und veranlasst außerdem die Regeneration der erschöpften Kammer. Hierfür wird ein Regenerationsventil 15 mit einem Stellmotor 16 durch die Steuereinrichtung 11 automatisch betätigt, wodurch Regeneriermittellösung (bevorzugt Salzsole) 7 aus einem Vorratsgefäß 8 durch die erschöpfte Kammer strömt. Bei der Regeneration wird zumindest zeitweilig ein Teil des dem Steuerkopf 19 zufließenden Rohwassers noch vor dem Durchflussmesser 14 abgezweigt und als Spülwasserstrom genutzt. Da in der gezeigten Ausführungsform der Durchflussmesser 14 den aus dem Steuerkopf 19 abfließenden Weichwasserstrom $V(t)_{teil1weich}^{mom}$ direkt bestimmt, beeinträchtigt diese Abzweigung nicht die automatische Nachregulierung der Verstellposition der Verschneideeinrichtung, und der Spülstrom braucht nicht bestimmt zu werden (Anmerkung: bei indirekter Bestimmung eines Teilstromes über den Gesamt-Rohwasserstrom müsste der Spülstrom jedoch berücksichtigt werden gemäß

$$V(t)_{roh} = V(t)_{teil1weich} + V(t)_{teil2roh} + V(t)_{teil3spül}).$$

Bei der Regeneration wird vorliegend auch ein Elektrolysestrom (das ist der Strom zur Bechlorung des Ionentauscherharzes 5 während der Regeneration zu Desinfektionszwecken) kontrolliert; damit kann gleichzeitig die Solekonzentration überwacht werden. Ein Salzmangel kann so rechtzeitig erkannt werden.

Für die Ermittlung der Rohwasserhärte aus der elektrischen Leitfähigkeit des Rohwassers sind in der elektronischen Steuereinrichtung 11 zwei verschiedene Umrechungen von der gemessenen elektrischen Leitfähigkeit auf die Rohwasserhärte vorgesehen. Die Umrechnung mit einer ersten Kalibrierkurve (F1) ist konservativ und gibt die (aus Vorab-Messungen ermittelten) maximal auftretenden Wasserhärten bei verschiedenen Leitfähigkeiten wieder; sie wird zur automatischen Steuerung der Regeneration eines Ionenaustauscherharzes 5 bei bekannter Kapazität des Ionenaustauscherharzes 5 verwendet. Die Umrechnung mit einer zweiten Kalibrierkurve (F2) ist realitätsnah und gibt die mittleren (d.h. mit dem kleinsten statistischen Fehler behafteten) Wasserhärten bei verschiedenen Leitfähigkeiten wieder; sie wird zur Steuerung der Verschneidevorrichtung (d.h. der Anteile der beiden Teilströme am Verschnittwasser) eingesetzt.

Als erfindungsgemäße Besonderheit weist die Steuereinrichtung 11 einen Speicher 11a für definierte Betriebssituationen auf, in denen die Nachregelung der Verstellposition der Verschneideeinrichtung (hier des Verschneideventils 9) nicht auf Grundlage der momentanen Messgrößen $WH_{roh}^{mom}$, $V(t)_{teil1weich}^{mom}$ und $V(t)_{teil2roh}^{mom}$ erfolgt, sondern ganz oder teilweise auf Grundlage von letztgültigen Werten für diese Messgrößen vor Eintritt der definierten Betriebssituation oder gespeicherten (vordefinierten) Standardwerten für diese Messgrößen beruht. Man beachte, dass die definierten Betriebssituationen geprüft und ggf. momentane Messgrößen ignoriert werden, wenn gerade Verschnittwasser entnommen wird. Im einzelnen sind im gezeigten Ausführungsbeispiel folgende drei, in Tabelle 1 aufgelistete, definierte Betriebssituationen hinterlegt:

Tabelle 1

| Nr | Vorliegen einer definierten Betriebssituation | vorgesehener Ersatz von Messgrößen |
|---|---|---|
| 1 | $WH_{roh}^{mom} < 2°dH$ oder $WH_{roh}^{mom} > 50°dH$ | Verwende für Nachregelung der Verstellposition der Verschneideeinrichtung den Wert $WH_{roh}= 14°dH$ Verwende für Steuerung der automatischen Regenerationsauslösung den Wert $WH_{roh}=20°dH$ |
| 2 | $WH_{roh}^{mom}$ hat sich seit der letzten Nachregelung der Verstellposition der Verschneideeinrichtung um weniger als 0,5°dH verändert | Verwende für Nachregelung der Verschneideeinrichtung den bestimmten Wert $WH_{roh}$ zum Zeitpunkt der letzten Nachregelung |
| 3 | $V(t)_{teil1weich}^{mom}$ oder $V(t)_{teil2roh}^{mom}$ sind außerhalb des Wertebereichs von 150 l/h bis 1800 l/h | Nachregelung der Verstellposition der Verschneideeinrichtung wird ganz ausgesetzt |

Die definierte Betriebssituationen **Nr. 1** indiziert nicht vertrauenswürdige Messwerte für die Rohwasserhärte, die auf einen Sensordefekt hindeuten. Als Maßnahme geht die Steuereinrichtung 11 für die Regenerationsauslösung von einem konservativen (hoch angesetzten) vorprogrammierten RohwasserHärtewert von 20°dH aus, um einen Härtedurchbruch (infolge Kapazitätserschöpfung des Ionentauscherharzes) auszuschließen; alternativ könnte beispielsweise aber auch (realitätsnäher, aber weniger sicher) auf einen gespeicherten, experimentell bestimmten Wert der Rohwasserhärte zum Zeitpunkt der letzten Regeneration zurück gegriffen werden. Für die Nachregelung der Verstellposition der Verschneideeinrichtung wird ein realitätsnah angesetzter, vorprogrammierter Rohwasserhärtewert von 14°dH angesetzt; alternativ könnte die Nachregelung der Verstellposition der Verschneideeinrichtung auch schlicht ganz ausgesetzt werden (d.h. die bisherige Verstellposition wird nicht verändert).

Die definierte Betriebssituation **Nr. 2** indiziert eine geringfügige Schwankung der Rohwasserhärte, die nur geringe Auswirkung auf die Verschnittwasserhärte hat und daher in der Nachregelung der Verstellposition der Verschneideeinrichtung nicht berücksichtigt werden soll. Dadurch wird der Verschleiß an der Verschneideeinrichtung reduziert. Die Ersatzgröße ist hier der letztgültige experimentelle Messwert der Rohwasserhärte, der in der letzten (jüngsten) Nachregelung berücksichtigt wurde. Erst wenn die momentane Rohwasserhärte sich um mehr als die vorgegebenen 0,5°dH gegenüber dem letztgültigen Messwert verändert hat, erfolgt wieder eine Nachregelung.

Die definierte Betriebssituation **Nr. 3** indiziert ein Verlassen des zuverlässigen Messbereichs eines der (oder auch beider) Durchflussmesser 14, 17. In diesem Fall wird die Nachregelung ganz ausgesetzt, d.h. sowohl für $WH_{roh}$, als auch $V(t)_{teil1weich}^{mom}$ und $V(t)_{teil2roh}^{mom}$ werden die letztgültigen Werte vor Verlassen des zuverlässigen Messbereichs angesetzt, wodurch die elektronische Steuereinrichtung 11 keine Veränderung der Verstellposition der Verschneideeinrichtung ansteuern wird.

Anmerkung: Falls einer der Teilströme indirekt bestimmt würde, etwa der erste Teilstrom $V(t)_{teil1weich}^{mom}$ über den Zusammenhang $V(t)_{teil1weich}^{mom} = V(t)_{roh}^{mom} - V(t)_{teil2roh}^{mom}$, so käme die Einrichtung einer weiteren, vierten definierten Betriebssituation in Betracht. Die vierte definierte Betriebssituation läge während der Regeneration einer der Ionentauscherharzkammern bzw. bei $V(t)_{teil3spül}^{mom} > 0$ vor. In diesem Fall fließt ein Spülwasserstrom $V(t)_{teil3spül}$, der bei der indirekten Bestimmung der Volumenströme zur Nachregelung der Verschneideeinrichtung mitberücksichtigt werden müsste. Falls dies nicht möglich ist (etwa weil kein entsprechender Durchflussmesser zur Verfügung steht), kann beispielsweise als erfindungsgemäße Maßnahme in der vierten Betriebssituation (d.h. in Regenerationsphasen) die Nachregelung der Verstellposition der Verschneideeinrichtung ganz ausgesetzt werden.

Durch die Einrichtung der definierten Betriebssituationen werden unnötige oder gar nachteilige Verstellungen der Verschneideeinrichtung während des Zapfens von Verschnittwasser vermieden, wodurch die Zuverlässigkeit der Wasserenthärtungsanlage 1 deutlich verbessert wird.

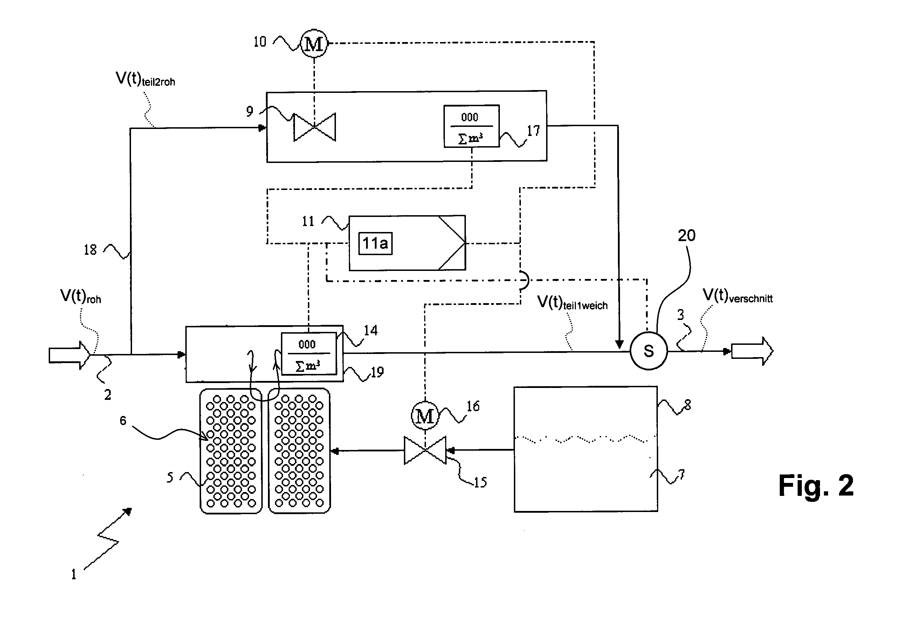

**Fig. 2** zeigt eine ähnliche Wasserenthärtungsanlage wie Fig. 1, die ebenfalls mit den erfindungsgemäßen Verfahren eingesetzt werden kann. Im Folgenden werden nur die Unterschiede erläutert.

In dieser Ausführungsform der Wasserenthärtungsanlage 1 ist ein Sensor 20 nicht im Rohwasserbereich, sondern im Verschnittwasserbereich kurz vor dem Ablauf 3 angeordnet. In diesem Fall kann die Wasserhärte $WH_{verschnitt}^{mom}$ im Verschnittwasserstrom $V(t)_{verschnitt}$ unmittelbar bestimmt und mit dem Sollwert SW verglichen werden. Die Steuereinrichtung 11 kann mittels der momentanen Wasserhärte $WH_{verschnitt}^{mom}$ die Verstellposition der Verschneideeinrichtung (hier des Verschneideventils 9) unmittelbar nachregeln; insbesondere gehen in die Nachregelung der Verstellposition der Verschneideeinrichtung in dieser Ausführungsform die momentanen Teilströme $V(t)_{teil1weich}^{mom}$ und $V(t)_{teil2roh}^{mom}$ nicht ein.

In dieser Ausführungsform sind daher etwas andere definierte Betriebssituationen vorgesehen:

Tabelle 2

| Nr | Vorliegen der definierten Betriebssituation | vorgesehener Ersatz von Messgrößen |
|---|---|---|
| 1 | $WH_{verschnitt}^{mom} < 2°dH$ oder $WH_{verschnitt}^{mom} > 50°dH$ | Nachregelung der Verstellposition der Verschneideeinrichtung wird ganz ausgesetzt; Verwende zur Steuerung der automatischen Regenerationsauslösung den Wert $WH_{verschnitt} = 8°dH$ |
| 2 | $WH_{verschnitt}^{mom}$ hat sich seit der letzten Nachregelung der Verstellposition der Verschneideeinrichtung um weniger als 0,5°dH verändert | Nachregelung der Verstellposition der Verschneideeinrichtung wird ganz ausgesetzt |

Soweit die Nachregelung der Verstellposition der Verschneideeinrichtung betroffen ist, wird in den definierten Betriebssituationen **Nr. 1 und 2** jeweils die Nachregelung ausgesetzt bzw. mit dem letzten, vor Eintritt der definierten Betriebssituation vorliegenden Wert für die Verschnittwasserhärte weiterbetrieben, so dass keine Veränderung der Verstellposition der Verschneideeinrichtung angesteuert wird.

Für die Regenerationssteuerung wird bei der definierten Betriebssituation **Nr. 1,** die einen Defekt am Sensor 20 indiziert, angenommen, dass eine mittlere Wasserhärte (hier der Sollwert von 8°dH) im Verschnittwasser nach wie vor eingestellt ist. Man beachte, dass für die automatische Auslösung der Regenerationssteuerung (aufgrund der im Ausführungsbeispiel vorgenommenen Gewichtung der verschiedenen Weichwasserentnahmen innerhalb eines Betriebszyklus mit den zugehörigen momentanen Rohwasserhärten) die Kenntnis der Teilströme $V(t)_{teil1weich}^{mom}$ und $V(t)_{teil2roh}^{mom}$ notwendig ist, um von der Verschnittwasserhärte auf die Rohwasserhärte zurückrechnen zu können.

**Patentansprüche**

1. Verfahren zum Betrieb einer Wasserenthärtungsanlage (1) mit

   - einer automatisch verstellbaren Verschneideeinrichtung zum Mischen eines Verschnittwasserstroms $V(t)_{verschnitt}$ aus einem ersten, enthärteten Teilstrom $V(t)_{teil1weich}$ und einem zweiten, rohwasserführenden Teilstrom $V(t)_{teil2roh}$,
   - einer elektronischen Steuereinrichtung (11),
   wobei die Steuereinrichtung (11) mittels einer oder mehrerer, experimentell bestimmter, momentaner Messgrößen die Verstellposition der Verschneideeinrichtung so nachregelt, dass die Wasserhärte im Verschnittwasserstrom $V(t)_{verschnitt}$ auf einen vorgegebenen Sollwert (SW) eingestellt wird, und mit
   - einer oder mehreren Sensoreinrichtungen (12, 14, 17, 20) zur direkten oder indirekten Ermittlung der einen oder der mehreren momentanen Messgrößen,
   **dadurch gekennzeichnet,**
   **dass** die Steuereinrichtung (11) in einer oder mehreren definierten Betriebssituationen der Wasserenthärtungsanlage mindestens eine der einen oder mehreren momentanen Messgrößen für die Nachregelung der Verstellposition der Verschneideeinrichtung ignoriert und stattdessen von der jeweils letztgültigen entsprechenden Messgröße vor Eintritt der definierten Betriebssituation oder einem in der elektronischen Steuereinrichtung (11) abgespeicherten Standardwert für die entsprechende Messgröße ausgeht.

2. Verfahren nach Anspruch 1, **dadurch gekennzeichnet,**
   **dass** die Wasserenthärtungsanlage (1) einen Sensor im Rohwasserbereich der Wasserenthärtungsanlage (1) zur Bestimmung der momentanen Rohwasserhärte $WH_{roh}^{mom}$ sowie mindestens zwei Durchflussmesser (14, 17) zur direkten oder indirekten Bestimmung der momentanen Teilströme $V(t)_{teil1weich}^{mom}$ und $V(t)_{teil2roh}^{mom}$ umfasst,
   und **dass** die Steuereinrichtung (11) in den definierten Betriebssituationen mindestens eine der momentanen Messgrößen $WH_{roh}^{mom}$, $V(t)_{teil1weich}^{mom}$ und $V(t)_{teil2roh}^{mom}$ für die Nachregelung der Verstellposition der Verschneidevorrichtung ignoriert und stattdessen von der jeweils letztgültigen entsprechenden Messgröße vor Eintritt der definierten Betriebssituation oder einem in der elektronischen Steuereinrichtung (11) abgespeicherten Standardwert für die entsprechende Messgröße ausgeht.

3. Verfahren nach Anspruch 2, **dadurch gekennzeichnet,**
   **dass** der Sensor als ein Leitfähigkeitssensor (12) ausgebildet ist, welcher die momentane elektrische Leitfähigkeit $L_{roh}^{mom}$ des Rohwassers bestimmt,
   **dass** die Steuereinrichtung (11) aus der bestimmten, momentanen Leitfähigkeit $L_{roh}^{mom}$ des Rohwassers die momentane Rohwasserhärte $WH_{roh}^{mom}$ bestimmt,
   wobei die Steuereinrichtung (11) weiterhin aus der bestimmten momentanen Rohwasserhärte $WH_{roh}^{mom}$ ein momentanes Soll-Verhältnis der Teilströme $V(t)_{teil1weich}$ und $V(t)_{teil2roh}$ bestimmt, mittels dessen sich im Verschnittwasserstrom $V(t)_{verschnitt}$ der vorgegebene Sollwert (SW) der Wasserhärte einstellt,
   und wobei die Steuereinrichtung (11) die Verstellposition der Verschneideeinrichtung mittels der bestimmten, momentanen Teilströme $V(t)_{teil1weich}^{mom}$ und $V(t)_{teil2roh}^{mom}$ auf das momentane Soll-Verhältnis nachregelt.

4. Verfahren nach einem der Ansprüche 2 oder 3, **dadurch gekennzeichnet, dass** die Steuereinrichtung (11) die Messgrößen für die beiden momentanen Teilströme $V(t)_{teil1weich}^{mom}$ und $V(t)_{teil2roh}^{mom}$ nur gemeinsam ignoriert.

5. Verfahren nach einem der Ansprüche 2 bis 4, **dadurch gekennzeichnet, dass** die definierten Betriebssituationen Zeiten umfassen, in denen sich das Verhältnis der Messgrößen $V(t)_{teil1weich}^{mom}$ zu $V(t)_{teil2roh}^{mom}$ seit der letzten Nachregelung der Verstellposition der Verschneideeinrichtung um weniger als einen relativen Strömeänderungswert verändert hat, insbesondere wobei der relative Strömeänderungswert zwischen 2% und 10% beträgt.

6. Verfahren nach Anspruch 1, **dadurch gekennzeichnet, dass** die Wasserenthärtungsanlage (1) einen Sensor (20) im Verschnittwasserbereich der Wasserenthärtungsanlage (1) zur Bestimmung der momentanen Verschnittwasserhärte $WH_{verschnitt}^{mom}$ umfasst,
   und dass die Steuereinrichtung (11) in den definierten Betriebssituationen zumindest die momentane Messgröße $WH_{verschnitt}^{mom}$, für die Nachregelung der Verstellposition der Verschneidevorrichtung ignoriert und stattdessen von der letztgültigen bestimmten Verschnittwasserhärte vor Eintritt der definierten Betriebssituation oder einem in der elektronischen Steuereinrichtung (11) abgespeicherten Standardwert für die Verschnittwasserhärte ausgeht.

7. Verfahren nach einem der vorhergehenden Ansprüche, **dadurch gekennzeichnet, dass** die definierten Betriebssituationen die Zeiten einer Regeneration einer Enthärtungsvorrichtung (6) umfassen.

8. Verfahren nach einem der vorhergehenden Ansprüche, **dadurch gekennzeichnet, dass** die definierten Betriebssituationen das Unterschreiten einer Mindestdurchflussmenge und/oder das Überschreiten einer Höchstdurchflussmenge an einem Durchflussmesser (14, 17) umfasst.

9. Verfahren nach einem der vorhergehenden Ansprüche, **dadurch gekennzeichnet, dass** die definierten Betriebssituationen Zeiten umfassen, in denen ein Härtedurchbruch an der Wasserenthärtungsanlage (1) vorliegt.

10. Verfahren nach einem der vorhergehenden Ansprüche, **dadurch gekennzeichnet, dass** die definierten Betriebssituationen Zeiten umfassen, in denen eine Leckage an der Wasserenthärtungsanlage (1) oder einer etwaigen, dieser nachgeordneten Wasserinstallation festgestellt ist.

11. Verfahren nach einem der vorhergehenden Ansprüche, **dadurch gekennzeichnet, dass** in zumindest einem Teil der definierten Betriebssituationen die Steuereinrichtung (11) die Nachregelung der Verstellposition der Verschneideeinrichtung ganz aussetzt, so dass der Verschnittwasserstrom mit der letzten, vor Eintritt der definierten Betriebssituation eingestellten Verstellposition der Verschneideeinrichtung gemischt wird.

12. Verfahren nach einem der vorhergehenden Ansprüche, **dadurch gekennzeichnet, dass** die definierten Betriebssituationen Zeiten umfassen, in denen eine experimentell bestimmte, momentane Wasserhärte, insbesondere eine momentane Rohwasserhärte $WH_{roh}^{mom}$ oder eine momentane Verschnittwasserhärte $WH_{verschnitt}^{mom}$, außerhalb eines vorgegebenen Werteintervalls liegt, insbesondere wobei das Werteintervall 2°dH bis 50°dH umfasst.

13. Verfahren nach einem der vorhergehenden Ansprüche, **dadurch gekennzeichnet, dass** die definierten Betriebssituationen Zeiten umfassen, in denen eine experimentell bestimmte, momentane Wasserhärte, insbesondere eine momentane Rohwasserhärte $WH_{roh}^{mom}$ oder eine momentane Verschnittwasserhärte $WH_{verschnitt}^{mom}$, sich seit der letzten Nachregelung der Verstellposition der Verschneideeinrichtung um weniger als einen vordefinierten Härtedifferenzwert verändert hat, insbesondere wobei der Härtedifferenzwert zwischen 0,2°dH und 2,0°dH beträgt.

14. Verfahren nach einem der vorhergehenden Ansprüche, **dadurch gekennzeichnet, dass** die Wasserenthärtungsanlage (1) einen Leitfähigkeitssensor (12) im Rohwasserbereich zur Bestimmung der momentanen Leitfähigkeit des Rohwassers $L_{roh}^{mom}$ umfasst, und dass die definierten Betriebssituationen Zeiten umfassen, in denen sich die momentane Messgröße $L_{ron}^{mom}$ seit der letzten Nachregelung der Verstellposition der Verschneideeinrichtung um weniger als einen vordefinierten Leitfähigkeitsdifferenzwert verändert hat, insbesondere wobei der Leitfähigkeitsdifferenzwert zwischen 5 $\mu$S/cm und 50 $\mu$S/cm beträgt.

15. Verfahren nach einem der vorhergehenden Ansprüche, **dadurch gekennzeichnet, dass** die definierten Betriebssituationen Zeiten umfassen, in denen unmittelbar vor einer beabsichtigten Auswertung einer oder mehrerer der momentanen Messgrößen nicht wenigstens eine Mindestmenge an Wasser durch die Wasserenthärtungsanlage (1) unterbrechungsfrei geflossen ist.

16. Verfahren nach einem der vorhergehenden Ansprüche, **dadurch gekennzeichnet, dass** die definierten Betriebssituationen Zeiten umfassen, in denen unmittelbar vor einer beabsichtigten Auswertung einer oder mehrerer der momentanen Messgrößen nicht wenigstens für eine Mindestzeitdauer Wasser durch die Wasserenthärtungsanlage (1) unterbrechungsfrei geflossen ist.

17. Verfahren nach einem der vorhergehenden Ansprüche, **dadurch gekennzeichnet, dass** die Wasserenthärtungsanlage (1) ein automatisch betätigbares Absperrventil unmittelbar hinter einem Zulauf (2) der Wasserenthärtungsanlage (1) umfasst, und dass die Steuereinrichtung (11) nach Feststellung einer Leckage das Absperrventil automatisch schließt, so dass der Wasserfluss durch die Wasserenthärtungsanlage (1) und eine etwaige an einem Auslass (3) der Wasserenthärtungsanlage (1) angeschlossene Wasserinstallation unterbrochen ist.

18. Verfahren nach einem der vorhergehenden Ansprüche, **dadurch gekennzeichnet, dass** die Wasserenthärtungsanlage (1) weiterhin ein Vorratsgefäß (8) zur Bereitstellung von Regeneriermittellösung (7) sowie Mittel zur automatischen Durchführung einer Regeneration einer Enthärtungsvorrichtung (6) umfasst, und **dass** die Steuereinrichtung (11) in Abhängigkeit von den seit der letzten Regeneration der Enthärtungsvorrichtung (6) erfolgten Weichwasserentnahmen automatisch eine Regeneration der Enthärtungsvorrichtung (6) auslöst.

19. Verfahren nach Anspruch 18, **dadurch gekennzeichnet, dass** die Steuereinrichtung (11) in Abhängigkeit von den seit einer letzten ausgelösten Regeneration erfolgten Weichwasserentnahmen und einer oder mehreren, zughörigen, bestimmten Rohwasserhärten eine Restkapazität der Enthärtungsvorrichtung (6) ermittelt und bei deren Erschöpfung automatisch eine Regeneration der Enthärtungsvorrichtung (6) auslöst.

20. Verfahren nach Anspruch 18 oder 19, **dadurch gekennzeichnet, dass** die Steuereinrichtung (11) in einer oder mehreren definierten Betriebssituationen mindestens eine der einen oder mehreren momentanen Messgrößen auch für die automatische Auslösung einer Regeneration der Enthärtungsanlage (6) ignoriert und stattdessen von der jeweils letztgültigen entsprechenden Messgröße vor Eintritt der Betriebssituation oder einem in der elektronischen Steuereinrichtung (11) abgespeicherten Standardwert für die entsprechende Messgröße ausgeht.

21. Verfahren nach einem der Ansprüche 19 oder 20, **dadurch gekennzeichnet,**
**dass** die Wasserenthärtungsanlage (1) einen Leitfähigkeitssensor (12) im Rohwasserbereich aufweist,
und **dass** eine Gesamthärte I des Rohwassers, die zur Steuerung des Regeneriervorgangs der Enthärtungsvorrichtung (6) verwendet wird, mittels einer ersten Kalibrierkennlinie (F1) aus der gemessenen Leitfähigkeit $L_{roh}$ abgeleitet wird,
und eine Gesamthärte II des Rohwassers, die zur Steuerung der Verschneideeinrichtung verwendet wird, mittels einer zweiten Kalibrierkennlinie (F2) aus der gemessenen Leitfähigkeit $L_{roh}$ abgeleitet wird.

22. Verfahren nach Anspruch 21, **dadurch gekennzeichnet, dass** die aus der ersten Kalibrierkennlinie (F1) abgeleitete Gesamthärte I zumindest abschnittsweise größer ist als die aus der zweiten Kalibrierkennlinie (F2) abgeleitete Gesamthärte II.

23. Wasserenthärtungsanlage (1) mit

- einer automatisch verstellbaren Verschneideeinrichtung zum Mischen eines Verschnittwasserstroms $V_{verschnitt}(t)$ aus einem ersten, enthärteten Teilstrom $V(t)_{teil1weich}$ und einem zweiten, rohwasserführenden Teilstrom $V(t)_{teil2roh,}$
- einer einen Speicher umfassenden elektronischen Steuereinrichtung (11),
wobei die Steuereinrichtung (11) dazu ausgebildet ist, mittels einer oder mehrerer, experimentell bestimmter, momentaner Messgrößen die Verstellposition der Verschneideeinrichtung so nachzuregeln, dass die Wasserhärte im Verschnittwasserstrom auf einen vorgegebenen Sollwert (SW) eingestellt wird, und mit
- einer oder mehreren Sensoreinrichtungen (12, 14, 17, 20) zur direkten oder indirekten Ermittlung der einen oder der mehreren momentanen Messgrößen,
**dadurch gekennzeichnet,**
**dass** in dem Speicher (11 a) eine oder mehrere definierte Betriebssituation(en) der Wasseraufbereitungsanlage abgespeichert sind, bei deren Vorliegen mindestens eine der einen oder mehreren momentanen Messgrößen für die Nachregelung der Verstellposition der Verschneideeinrichtung von der Steuereinrichtung ignorierbar ist, und dass in der Steuereinrichtung (11) ein Standardwert für die mindestens eine momentane Messgröße oder eine jeweils letztgültige entsprechende Messgröße vor Eintritt der definierten Betriebssituation für die Nachregelung der Verstellposition der Verschneideeinrichtung abgespeichert ist.

24. Verwendung einer Wasserenthärtungsanlage (1) nach Anspruch 23 in einem Verfahren nach einem der Ansprüche 1 bis 22.

## Claims

1. Method for operating a water softening system (1) comprising

- an automatically adjustable blending means for mixing a blended water flow $V(t)_{blended}$ from a first, softened partial flow $V(t)_{part1soft}$ and a second untreated water partial flow $V(t)_{part2raw}$,
- an electronic control means (11),
wherein the control means (11) readjusts the adjustment position of the blending means by means of one or more experimentally determined instantaneous measured values in such a fashion that the water hardness in the blended water flow $V(t)_{blended}$ is adjusted to a predetermined desired value (SW), and comprising
- one or more sensor means (12, 14, 17, 20) for direct or indirect determination of the one or more instantaneous measured values, **characterized in that**

the control means (11) ignores at least one of the one or more instantaneous measured values for readjustment of the adjustment position of the blending means in one or more defined operating situations of the water softening system, and instead uses the respectively last corresponding measured value that was valid prior to occurrence of the defined operating situation, or a standard value for the corresponding measured value, which is stored in the electronic control means (11).

2. Method according to claim 1, **characterized in that** the water softening system (1) comprises a sensor in the untreated water area of the water softening system (1) for determining the instantaneous untreated water hardness $WH_{raw}^{inst}$ and at least two flow meters (14, 17) for direct or indirect determination of the instantaneous partial flows $V(t)_{part1soft}^{inst}$ and $V(t)_{part2raw}^{inst}$,
and the control means (11) ignores at least one of the instantaneous measured values $WH_{raw}^{inst}$, $V(t)_{part1soft}^{inst}$ and $V(t)_{part2raw}^{inst}$ for readjustment of the adjustment position of the blending device in the defined operating situations, and instead uses the respectively last corresponding measured value that was valid prior to occurrence of the defined operating situation or a standard value for the corresponding measured value, which is stored in the electronic control means (11).

3. Method according to claim 2, **characterized in that** the sensor is designed as a conductivity sensor (12), which determines the instantaneous electrical conductivity $L_{raw}^{inst}$ of the untreated water,
that the control means (11) determines the instantaneous untreated water hardness $WH_{raw}^{inst}$ from the defined instantaneous conductivity $L_{raw}^{inst}$ of the untreated water,
wherein the control means (11) furthermore determines an instantaneous desired ratio of the partial flows $V(t)_{part1soft}$ and $V(t)_{part2raw}$ from the defined instantaneous untreated water hardness $WH_{raw}^{inst}$ by means of which the predetermined desired value (SW) of the water hardness is established in the blended water flow $V(t)_{blended}$,
and wherein the control means (11) readjusts the adjustment position of the blending means to the instantaneous desired ratio by means of the defined instantaneous partial flows $V(t)_{part1soft}^{inst}$ and $V(t)_{part2raw}^{inst}$.

4. Method according to any one of the claims 2 or 3, **characterized in that** the control means (11) ignores the measured values for the two instantaneous partial flows $V(t)_{part1soft}^{inst}$ and $V(t)_{part2raw}^{inst}$ only in combination together.

5. Method according to any one of the claims 2 through 4, **characterized in that** the defined operating situations include times when the ratio between the measured values $V(t)_{part1soft}^{inst}$ and $V(t)_{part2raw}^{inst}$ has changed since the last readjustment of the adjustment position of the blending means by less than a relative flow change value, in particular, wherein the relative flow change value is between 2% and 10%.

6. Method according to claim 1, **characterized in that** the water softening system (1) comprises a sensor (20) in the blended water area of the water softening system (1) for determining the instantaneous blended water hardness $WH_{blended}^{inst}$,
and that the control means (11) ignores at least the instantaneous measured value $WH_{blended}^{inst}$ for readjustment of the adjustment position of the blending device in the defined operating situations, and instead uses the last defined blended water hardness that was valid prior to occurrence of the defined operating situation or a standard value for the blended water hardness, which is stored in the electronic control means (11).

7. Method according to any one of the preceding claims, **characterized in that** the defined operating situations include the times of regeneration of a softening device (6).

8. Method according to any one of the preceding claims, **characterized in that** the defined operating situations include falling below a minimum flow rate and/or exceeding a maximum flow rate at a flow meter (14, 17).

9. Method according to any one of the preceding claims, **characterized in that** the defined operating situations include times when there is a hardness breakthrough at the water softening system (1).

10. Method according to any one of the preceding claims, **characterized in that** the defined operating situations include times when a leakage is detected at the water softening system (1) or any downstream water installation.

11. Method according to any one of the preceding claims, **characterized in that** in at least part of the defined operating situations, the control means (11) completely suspends readjustment of the adjustment position of the blending means such that the blended water flow is mixed with the last adjustment position of the blending means, which was set prior to occurrence of the defined operating situation.

12. Method according to any one of the preceding claims, **characterized in that** the defined operating situations include times when an experimentally determined instantaneous water hardness, in particular, an instantaneous untreated water hardness $WH_{raw}^{inst}$ or an instantaneous blended water hardness $WH_{blended}^{inst}$ is outside of a predetermined value interval, in particular, wherein the value interval ranges from 2°dH to 50°dH.

13. Method according to any one of the preceding claims, **characterized in that** the defined operating situations include times when an experimentally determined instantaneous water hardness, in particular, an instantaneous untreated water hardness $WH_{raw}^{inst}$ or an instantaneous blended water hardness $WH_{blended}^{inst}$ has changed by less than a predefined hardness difference value since the last readjustment of the adjustment position of the blending means, in particular, wherein the hardness difference value is between 0.2°dH and 2.0°dH.

14. Method according to any one of the preceding claims, **characterized in that** the water softening system (1) comprises a conductivity sensor (12) in the untreated water area for determining the instantaneous conductivity of the untreated water $L_{raw}^{inst}$, and that the defined operating situations include times when the instantaneous measured value $L_{raw}^{inst}$ has changed by less than a predefined conductivity difference value since the last readjustment of the adjustment position of the blending means, in particular, wherein the conductivity difference value is between 5μS/cm and 50μS/cm.

15. Method according to any one of the preceding claims, **characterized in that** the defined operating situations include times when at least a minimum amount of water has not been continuously flowing through the water softening system (1) directly prior to an intended evaluation of one or more of the instantaneous measured values.

16. Method according to any one of the preceding claims, **characterized in that** the defined operating situations include times when water has not been continuously flowing through the water softening system (1) for at least a minimum duration directly prior to an intended evaluation of one or more of the instantaneous measured values.

17. Method according to any one of the preceding claims, **characterized in that** the water softening system (1) comprises an automatically actuatable stop valve directly downstream of an inlet (2) of the water softening system (1) and the control means (11) automatically closes the stop valve after detection of a leakage such that the water flow through the water softening system (1) and any water installation connected to an outlet (3) of the water softening system (1) is interrupted.

18. Method according to any one of the preceding claims, **characterized in that** the water softening system (1) moreover comprises a supply container (8) for providing regenerant solution (7) and means for automatic performance of regeneration of a softening device (6), and the control means (11) automatically triggers regeneration of the softening device (6) in dependence on the soft water withdrawals performed since the last regeneration of the softening device (6).

19. Method according to claim 18, **characterized in that** the control means (11) detects a residual capacity of the softening device (6) in dependence on the soft water withdrawals performed since a last triggered regeneration, and on one or more associated determined untreated water hardnesses, and upon depletion thereof, automatically triggers regeneration of the softening device (6).

20. Method according to claim 18 or 19, **characterized in that** the control means (11) ignores at least one of the one or more instantaneous measured values also for automatic triggering of regeneration of the softening system (6) in one or more defined operating situations, and instead uses the respectively last corresponding measured value that was valid prior to occurrence of the operating situation, or a standard value for the corresponding measured value, which is stored in the electronic control means (11).

21. Method according to one of the claims 19 or 20, **characterized in that** the water softening system (1) comprises a conductivity sensor (12) in the untreated water area, and that an overall hardness I of the untreated water, which hardness is used to control the regeneration process of the softening device (6) is derived from the measured conductivity $L_{raw}$ by means of a first calibration characteristic (F1), and an overall hardness II of the untreated water, which hardness is used to control the blending means, is derived from the measured conductivity $L_{raw}$ using a second calibration characteristic (F2).

22. Method according to claim 21, **characterized in that** the overall hardness I derived from the first calibration characteristic (F1) is greater, at least in sections, than the overall hardness II derived from the second calibration characteristic (F2).

23. Water softening system (1) comprising

- an automatically adjustable blending means for mixing a blended water flow $V_{blended}(t)$ from a first softened partial flow $V(t)_{part1soft}$ and a second untreated water partial flow $V(t)_{part2raw}$,
- an electronic control means (11) with a storage,

wherein the control means (11) is designed to readjust the adjustment position of the blending means by means of one or more experimentally determined instantaneous measured values in such a fashion that the water hardness in the blended water flow is adjusted to a predetermined desired value (SW), and comprising one or more sensor means (12, 14, 17, 20) for direct or indirect determination of the one or more instantaneous measured values, **characterized in that**

the storage (11a) comprises one or more stored defined operating situation(s) of the water softening system upon occurrence of which at least one of the one or more instantaneous measured values for readjustment of the adjustment position of the blending means can be ignored by the control means, and the electronic control means (11) comprises a stored standard value for the at least one instantaneous measured value or a stored respectively last corresponding measured value that was valid prior to occurrence of the defined operating situation for readjustment of the adjustment position of the blending means.

24. The use of a water softening system (1) according to claim 23 in a method according to any one of the claims 1 to 22.

**Revendications**

1. Procédé pour faire fonctionner une installation d'adoucissement d'eau (1) comprenant

- un dispositif de mitigeage à réglable automatique pour mélanger un courant d'eau mitigée $V(t)_{verschnitt}$ à partir d'un premier courant partiel adouci $V(t)_{teil1weich}$ et d'un deuxième courant partiel d'eau brute $V(t)_{teil2roh}$,
- un dispositif de commande électronique (11),

le dispositif de commande (11) corrigeant, au moyen d'une ou plusieurs grandeurs de mesure momentanées déterminées expérimentalement, la position de réglage du dispositif de mitigeage de façon que la dureté de l'eau dans le courant d'eau mitigée $V(t)_{verschnitt}$ soit réglée à une valeur de consigne prédéfinie (SW), et

- un ou plusieurs dispositifs capteurs (12, 14, 17, 20) pour la détermination directe ou indirecte de la ou des plusieurs grandeurs de mesure momentanées,

**caractérisé en ce**

**que** le dispositif de commande (11) ignore, dans une ou plusieurs situations de fonctionnement définies de l'installation d'adoucissement d'eau, au moins une de la ou des plusieurs grandeurs de mesure momentanées pour la correction de la position de réglage du dispositif de mitigeage et se base à la place sur la dernière grandeur de mesure correspondante valide avant que la situation de fonctionnement définie se présente ou sur une valeur standard enregistrée dans le dispositif de commande électronique (11) pour la grandeur de mesure correspondante.

2. Procédé selon la revendication 1, **caractérisé en ce que** l'installation d'adoucissement d'eau (1) comprend un capteur dans la zone d'eau brute de l'installation d'adoucissement d'eau (1) pour déterminer la dureté momentanée de l'eau brute $WH_{roh}^{mom}$ ainsi qu'au moins deux débitmètres (14, 17) pour déterminer directement ou indirectement les courants partiels momentanés $V(t)_{teillweich}^{mom}$ et $V(t)_{teil2roh}^{mom}$, et que le dispositif de commande (11) ignore, dans les situations de fonctionnement définies, au moins une des grandeurs de mesure momentanées $WH_{roh}^{mom}$, $V(t)_{teil1weich}^{mom}$ et $V(t)_{teil2roh}^{mom}$ pour la correction de la position de réglage du dispositif de mitigeage et se base à la place sur la dernière grandeur de mesure correspondante valide avant que la situation de fonctionnement définie se présente ou sur une valeur standard enregistrée dans le dispositif de commande électronique (11) pour la grandeur de mesure correspondante.

3. Procédé selon la revendication 2, **caractérisé en ce**

**que** le capteur est réalisé sous la forme d'un capteur de conductivité (12), lequel détermine la conductivité électrique momentanée $L_{roh}^{mom}$ de l'eau brute,

**que** le dispositif de commande (11) détermine à partir de la conductivité momentanée $L_{roh}^{mom}$ déterminée de l'eau brute la dureté momentanée de l'eau brute $WH_{roh}^{mom}$,

le dispositif de commande (11) déterminant en outre, à partir de la dureté momentanée de l'eau brute $WH_{roh}^{mom}$ déterminée, un rapport de consigne momentané des courants partiels $V(t)_{teil1weich}$ et $V(t)_{teil2roh}$ au moyen duquel la valeur de consigne prédéfinie (SW) de la dureté de l'eau est atteinte dans le courant d'eau mitigée $V(t)_{verschnitt,}$ et le dispositif de commande (11) corrigeant la position de réglage du dispositif de mitigeage au moyen des courants partiels momentanés $V(t)_{teil1weich}^{mom}$ et $V(t)_{teil2roh}^{mom}$ déterminés sur la base du rapport de consigne momentané.

4.  Procédé selon l'une des revendications 2 ou 3, **caractérisé en ce que** le dispositif de commande (11) ignore les grandeurs de mesure pour les deux courants partiels momentanés $V(t)_{teil1weich}^{mom}$ et $V(t)_{teil2roh}^{mom}$ seulement ensemble.

5.  Procédé selon l'une des revendications 2 à 4, **caractérisé en ce que** les situations de fonctionnement définies comprennent des temps pendant lesquels le rapport entre les grandeurs de mesure $V(t)_{teil1weich}^{mom}$ et $V(t)_{teil2roh}^{mom}$ a varié de moins d'une valeur relative de variation de courants depuis la dernière correction de la position de réglage du dispositif de mitigeage, la valeur relative de variation de courants étant en particulier comprise entre 2 % et 10 %.

6.  Procédé selon la revendication 1, **caractérisé en ce que** l'installation d'adoucissement d'eau (1) comprend un capteur (20) dans la zone d'eau mitigée de l'installation d'adoucissement d'eau (1) pour déterminer la dureté momentanée de l'eau mitigée $WH_{verschnitt}^{mom}$, et **que** le dispositif de commande (11) ignore, dans les situations de fonctionnement définies, au moins la grandeur de mesure momentanée $WH_{verschnitt}^{mom}$ pour la correction de la position de réglage du dispositif de mitigeage et se base à la place sur la dernière dureté de l'eau mitigée valide déterminée avant que la situation de fonctionnement définie se présente ou sur une valeur standard enregistrée dans le dispositif de commande électronique (11) pour la dureté de l'eau mitigée.

7.  Procédé selon l'une des revendications précédentes, **caractérisé en ce que** les situations de fonctionnement définies comprennent les temps d'une régénération d'un dispositif d'adoucissement (6).

8.  Procédé selon l'une des revendications précédentes, **caractérisé en ce que** les situations de fonctionnement définies comprennent le sous-passement d'un débit minimum et/ou le dépassement d'un débit maximum à un débitmètre (14, 17).

9.  Procédé selon l'une des revendications précédentes, **caractérisé en ce que** les situations de fonctionnement définies comprennent des temps pendant lesquels une fuite de dureté est présente sur l'installation d'adoucissement d'eau (1).

10. Procédé selon l'une des revendications précédentes, **caractérisé en ce que** les situations de fonctionnement définies comprennent des temps pendant lesquels une fuite est constatée sur l'installation d'adoucissement d'eau (1) ou une éventuelle installation d'eau placée en aval de celle-ci.

11. Procédé selon l'une des revendications précédentes, **caractérisé en ce que** dans au moins une partie des situations de fonctionnement définies, le dispositif de commande (11) suspend complètement la correction de la position de réglage du dispositif de mitigeage, de sorte que le courant d'eau mitigée est mélangé avec la dernière position de réglage du dispositif de mitigeage, réglée avant que la situation de fonctionnement définie se présente.

12. Procédé selon l'une des revendications précédentes, **caractérisé en ce que** les situations de fonctionnement définies comprennent des temps pendant lesquels une dureté momentanée de l'eau déterminée expérimentalement, en particulier une dureté momentanée de l'eau brute $WH_{roh}^{mom}$ ou une dureté momentanée de l'eau mitigée $WH_{verschnitt}^{mom}$, se situe en dehors d'un intervalle de valeurs prédéfini, l'intervalle de valeurs s'étendant en particulier de 2 °dH à 50 °dH.

13. Procédé selon l'une des revendications précédentes, **caractérisé en ce que** les situations de fonctionnement définies comprennent des temps pendant lesquels une dureté momentanée de l'eau déterminée expérimentalement, en particulier une dureté momentanée de l'eau brute $WH_{roh}^{mom}$ ou une dureté momentanée de l'eau mitigée $WH_{verschnitt}^{mom}$, a varié de moins d'une valeur de différence de dureté prédéfinie depuis la dernière correction de la position de réglage du dispositif de mitigeage, la valeur de différence de dureté étant en particulier comprise entre 0,2 °dH et 2,0 °dH.

14. Procédé selon l'une des revendications précédentes, **caractérisé en ce que** l'installation d'adoucissement d'eau (1) comprend un capteur de conductivité (12) dans la zone d'eau brute pour déterminer la conductivité momentanée de l'eau brute $L_{roh}^{mom}$, et que les situations de fonctionnement définies comprennent des temps pendant lesquels la grandeur de mesure momentanée $L_{roh}^{mom}$ a varié de moins d'une valeur de différence de conductivité prédéfinie depuis la dernière correction de la position de réglage du dispositif de mitigeage, en particulier la valeur de différence de conductivité étant comprise entre 5 μS/cm et 50 μS/cm.

15. Procédé selon l'une des revendications précédentes, **caractérisé en ce que** les situations de fonctionnement définies comprennent des temps pendant lesquels immédiatement avant une évaluation prévue d'une ou plusieurs des grandeurs de mesure momentanées, au moins une quantité minimum d'eau ne s'est pas écoulée de façon ininterrompue à travers l'installation d'adoucissement d'eau (1).

16. Procédé selon l'une des revendications précédentes, **caractérisé en ce que** les situations de fonctionnement définies comprennent des temps pendant lesquels immédiatement avant une évaluation prévue d'une ou plusieurs des grandeurs de mesure momentanées, de l'eau ne s'est pas écoulée de façon ininterrompue à travers l'installation d'adoucissement d'eau (1) au moins pendant une durée minimum.

17. Procédé selon l'une des revendications précédentes, **caractérisé en ce que** l'installation d'adoucissement d'eau (1) comprend une vanne d'arrêt à commande automatique immédiatement derrière une arrivée (2) de l'installation d'adoucissement d'eau (1), et que le dispositif de commande (11) ferme automatiquement la vanne d'arrêt après avoir constaté une fuite, de sorte que le flux d'eau à travers l'installation d'adoucissement d'eau (1) et une éventuelle installation d'eau raccordée à une sortie (3) de l'installation d'adoucissement d'eau (1) est interrompu.

18. Procédé selon l'une des revendications précédentes, **caractérisé en ce que** l'installation d'adoucissement d'eau (1) comprend en outre un récipient de stockage (8) pour fournir une solution régénérante (7) ainsi que des moyens pour exécuter automatiquement une régénération d'un dispositif d'adoucissement (6), et que le dispositif de commande (11) déclenche automatiquement une régénération du dispositif d'adoucissement (6) en fonction des prises d'eau adoucie effectuées depuis la dernière régénération du dispositif d'adoucissement (6).

19. Procédé selon la revendication 18, **caractérisé en ce que** le dispositif de commande (11) détermine une capacité restante du dispositif d'adoucissement (6) en fonction des prises d'eau adoucie effectuées depuis la dernière régénération déclenchée et d'une ou plusieurs duretés d'eau brute associées déterminées et déclenche automatiquement une régénération du dispositif d'adoucissement (6) lorsque celle-ci est épuisée.

20. Procédé selon la revendication 18 ou 19, **caractérisé en ce que** le dispositif de commande (11) ignore, dans une ou plusieurs situations de fonctionnement définie, au moins une des une ou plusieurs grandeurs de mesure momentanées aussi pour le déclenchement automatique d'une régénération de l'installation d'adoucissement (6) et se base à la place sur la dernière grandeur de mesure correspondante valide avant que la situation de fonctionnement définie se présente ou sur une valeur standard enregistrée dans le dispositif de commande électronique (11) pour la grandeur de mesure correspondante.

21. Procédé selon l'une des revendications 19 ou 20, **caractérisé en ce que** l'installation d'adoucissement d'eau (1) présente un capteur de conductivité (12) dans la zone d'eau brute,
et qu'une dureté totale I de l'eau brute, qui est utilisée pour commander le processus de régénération du dispositif d'adoucissement (6), est déduite de la conductivité $L_{roh}$ mesurée au moyen d'une première caractéristique d'étalonnage (F1),
et une dureté totale II de l'eau brute, qui est utilisée pour commander le dispositif de mitigeage, est déduite de la conductivité $L_{roh}$ mesurée au moyen d'une deuxième caractéristique d'étalonnage (F2).

22. Procédé selon la revendication 21, **caractérisé en ce que** la dureté totale I déduite de la première caractéristique d'étalonnage (F1) est supérieure au moins sur certaines parties à la dureté totale II déduite de la deuxième caractéristique d'étalonnage (F2).

23. Installation d'adoucissement d'eau (1) comprenant

    - un dispositif de mitigeage à réglage automatique pour mélanger un courant d'eau mitigée $V_{verschnitt}(t)$ à partir d'un premier courant partiel adouci $V(t)_{teil1weich}$ et d'un deuxième courant partiel d'eau brute $V(t)_{teil2roh}$,
    - un dispositif de commande électronique (11) comprenant une mémoire,
    le dispositif de commande (11) étant conçu pour corriger, au moyen d'une ou plusieurs grandeurs de mesure momentanées déterminées expérimentalement, la position de réglage du dispositif de mitigeage de façon que la dureté de l'eau dans le courant d'eau mitigée soit réglée à une valeur de consigne prédéfinie (SW), et
- un ou plusieurs dispositifs capteurs (12, 14, 17, 20) pour la détermination directe ou indirecte de la ou des plusieurs grandeurs de mesure momentanées,

**caractérisée en ce**

**que** dans la mémoire (11a) sont enregistrées une ou plusieurs situations de fonctionnement définies de l'installation d'adoucissement d'eau, en présence desquelles au moins une de la ou des plusieurs grandeurs de mesure momentanées pour la correction de la position de réglage du dispositif de mitigeage peuvent être ignorées, et que dans le dispositif de commande (11) est enregistrée une valeur standard pour ladite au moins une grandeur de mesure momentanée ou une dernière grandeur de mesure correspondante valide avant que la situation de fonctionnement définie se présente, pour la correction de la position de réglage du dispositif de mitigeage.

24. Utilisation d'une installation d'adoucissement d'eau (1) selon la revendication 23 dans un procédé selon l'une des revendications 1 à 22.

Fig. 1

$V(t)_{verschnitt}$

$V(t)_{teil1weich}$

$V(t)_{teil2roh}$

$V(t)_{roh}$

$\sum m^3$ 000

$\sum m^3$ 000

11a

LF

M

1 2 3 5 6 7 8 9 10 11 12 14 15 16 17 18 19

Fig. 2

EP 2 334 431 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0900765 B1

- US 20070215531 A1